# EUROPÄISCHE PATENTANMELDUNG

(11) **EP 1 918 057 A1**
(43) Veröffentlichungstag der Anmeldung: **07.05.2008**
(21) Anmeldenummer: 07117319.9
(22) Anmeldetag: 27.09.2007
(51) Int. Cl.: B23K 11/06, B23K 33/00

(54) **Geschweißte Rohrverbindung**

(30) Priorität: 04.11.2006 DE 102006052032
(71) Anmelder: ContiTech Kühner GmbH & Cie. KG, 71570 Oppenweiler (DE)
(72) Erfinder: MARSCHALL, Peter, DE/74081 Heilbronn (DE); RÖCK, Claus, 71579, Spiegelberg (DE)
(74) Vertreter: Finger, Karsten

(57) **Zusammenfassung**

Die Erfindung betrifft eine Widerstands-Schweißverbindung zwischen zwei dünnwandigen Rohrabschnitten (1,2) unterschiedlicher Wandstärke, bei der ein erster Rohrabschnitt (2) stirnseitig an die Mantelfläche eines zweiten Rohrabschnitts (1) angeschweißt ist. Der Rohrabschnitt mit dickerer Wandstärke (2) weist eine Stufenbohrung (4) und einen konusförmigen Endabschnitt (3) auf, wobei Konus (3) und Stufenbohrung (4) so zusammenwirken, dass die Wandstärke im Bereich des Konus ein Minimum aufweist. Durch diese Engstelle kann die Schweißwärme nicht zu stark in die dickere Wand abfließen. Die Schweißverbindung wird dadurch sicherer.

## Beschreibung

Die Erfindung betrifft eine Widerstands-Schweißverbindung zwischen zwei dünnwandigen Rohrabschnitten unterschiedlicher Wandstärke, bei der ein erster Rohrabschnitt stirnseitig so an die Mantelfläche eines zweiten Rohrabschnitts angeschweißt ist, dass eine Schweißnaht entsteht, die die fluidleitenden Bereiche der beiden Rohrabschnitte dicht miteinander verbindet.

Derartige Schweißverbindungen sind an sich seit langem in großer Vielzahl bekannt. Ein Problem bei derartigen Verbindungen ist, dass bei unterschiedlichen Wandstärken die Schweißwärme in den unterschiedlichen Teilen unterschiedlich stark abfließt. Dies kann dazu führen, dass die Schweißung nur unvollständig und somit undicht ist. Besonders kritisch ist dies bei Widerstandsschweißungen, da hier meist kein zusätzlicher Schweißwerkstoff in die Schweißnaht eingebracht wird.

Gerade diese Schweißverfahren sind aber besonders gut automatisierbar und damit preiswert. Der Stand der Technik schlägt deshalb Lösungen vor, den Wärmefluss in den zu verschweißenden Bauteilen zu steuern.

Die DD 223 962 A1 zeigt eine Pressstumpfschweißung zwischen einem Rohr und einer Platte, wobei das Rohr gegenüber der Platte eine deutlich geringere Wandstärke aufweist.

Um den Wärmabfluss in die dickere Platte zu behindern, wird vorgeschlagen, in der Nähe der Schweißstelle thermische Formrillen einzubringen, die durch örtlich begrenzte, die Schweißstelle aber vollständig umgreifende Reduktion der Materialstärke einen zu schnellen Wärmeabfluss verhindern sollen.

Ähnliche Lösungen sind auch in der DE 913 373, der DE 195 16 147 A1 oder der EP 0 988 488 B1 angegeben.

Das Erzeugen der Formrille bedingt jedoch einen zusätzlichen Arbeitsgang. Alle genannten Lösungsansätze beziehen sich außerdem auf Schweißungen, bei denen entweder die Rohre stirnseitig aneinander geschweißt werden oder die Stirnseite eines Rohres gegen ein ebenes Bauteil geschweißt wird. Durch die Kerbwirkung derartiger Rillen kann außerdem die Dauerfestigkeit der Bauteile reduziert sein.

Der Erfindung liegt die Aufgabe zugrunde, eine Schweißung zwischen zwei Rohren für Schweißungen ohne zusätzliche Werkstoffzufuhr, beispielsweise Widerstandsschweißungen, in der eingangs genannten Anordnung der Rohre zueinander zu schaffen, die ohne Einbußen in der Dauerfestigkeit und mit geringem fertigungstechnischen Aufwand eine dichte Verbindung der fluidführenden Bereiche ermöglicht.

Diese Aufgabe wird dadurch gelöst, dass die zu verschweißenden Bauteile derart angeordnet und vorbereitet sind, dass der dickwandigere Rohrabschnitt an der zu verschweißenden Stirnseite eine konische Außenkontur aufweist und dass der dickwandigere Rohrabschnitt eine axiale Stufenbohrung aufweist, die so geformt ist, dass die Bohrung im Bereich der zu verschweißenden Stirnseite des dickwandigeren Rohrabschnitts gegenüber der übrigen Bohrung einen geringeren Durchmesser aufweist und der Übergang zwischen den beiden Durchmessern der Stufenbohrung in einem Übergangsbereich stufenförmig ausgeführt ist, wobei der Übergangsbereich so angeordnet ist, dass die Wandstärke des dickwandigeren Rohrabschnitts im Übergangsbereich ein relatives Minimum aufweist.

Durch eine derartige Anordnung ist eine gleichmäßige Wärmeverteilung in der Schweißnaht einstellbar, da durch das relative Minimum der Wandstärke die Schweißwärme nicht übermäßig in das dickwandigere Bauteil abfließen kann.

In einer Weiterbildung der Erfindung ist die Bohrung in der Seitenwand des dünnwandigeren Rohrabschnitts konisch so ausgeführt, dass der kleinere Durchmesser des Konus zum Inneren des dünnwandigeren Rohrabschnitts weist und der Öffnungswinkel des Konus so bemessen ist, dass zwischen der konusförmigen Außenwand des dickwandigeren Rohrabschnitts und der Bohrung im dünnwandigeren Rohrabschnitts eine geschlossene ununterbrochene Kontaktlinie besteht.

Eine derartige Gestaltung der Bauteile hat den Vorteil, dass die Konusform des dickwandigeren Rohrabschnitts eine genaue Anpassung an die Durchmesser des dünnwandigeren Rohrabschnitts ermöglicht. Die konusförmige Gestaltung der Bohrung im dünnwandigeren Rohr ermöglicht eine zum Widerstandsschweißen einer dichten Verbindung notwendige geschlossene Kontaktlinie zwischen den zu verschweißenden Teilen.

In einer Weiterbildung der Erfindung ist die konusförmige Bohrung im dünnwandigeren Rohr derart gestaltet, dass der Öffnungswinkel des Konus der Bohrung des dünnwandigeren Rohres eine geringfügig größere Öffnung aufweist, als es der korrespondierende Konuswinkel der Außenkontur des dickwandigeren Rohrabschnitts erfordert.

Diese Gestaltung erleichtert die Bildung einer geschlossenen Kontaktlinie zwischen den beiden Rohrabschnitten, da die Winkeltoleranzen zwischen der Bohrung und der konusförmigen Außenkontur des dickwandigeren Rohrabschnitts größer gewählt werden können

Durch die erfindungsgemäße Lösung ist es möglich, die eingangs geschilderten Schweißvorgänge weitgehend zu automatisieren und damit kostengünstig herzustellen.

Anhand der Zeichnung wird nachstehend ein Beispiel der Erfindung näher erläutert. Es zeigt
- Fig. 1: eine erfindungsgemäße Anordnung eines seitlich an ein Rohr angeschweißten Rohrstutzens in einem Teillängsschnitt und
- Fig. 2: die erfindungsgemäße Gestaltung der den Rohrstutzen aufnehmenden Bohrung des Rohres in einem Längsschnitt.

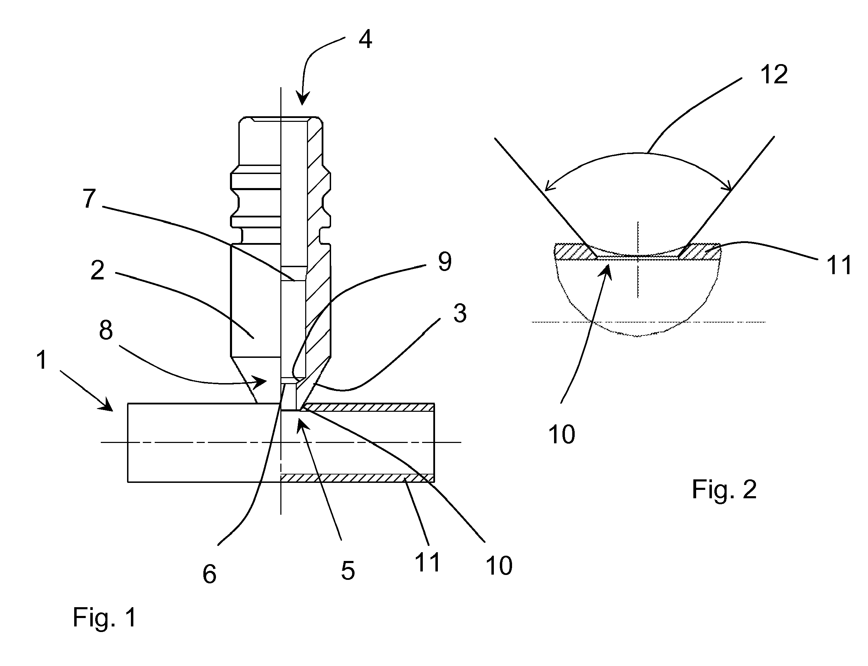

In Fig. 1 ist ein Rohrabschnitt 1 mit einem seitlich angeschweißten Anschlussstutzen 2 in einem Teillängsschnitt dargestellt. Der Anschlussstutzen 2 weist gegenüber dem Rohrabschnitt 1 eine wesentlich größere Wandstärke und an seinem dem Rohrabschnitt 1 zugeordneten Ende eine konische Mantelfläche 3 auf.

Der Anschlussstutzen 2 weist weiterhin in seinem Inneren eine zentrische axiale Bohrung 4 auf. Die Bohrung 4 ist an ihrem dem Rohrabschnitt 1 zugewandten Ende 5 abgesetzt, wobei der Durchmesser 6 am Ende 5 kleiner ist als die übrigen Durchmesser 7 und 8 der Bohrung 4.

Die Durchmesser 7 und 6 gehen in einem Übergangsbereich 8 über einen flachen Konus 9 ineinander über. Der Übergangsbereich 8 und die Durchmesser 7 und 6 sind so angeordnet, dass die im Übergangsbereich 8 zwischen der Bohrung 4 mit dem Durchmesser 7 sowie der Bohrung 4 mit dem Durchmesser 6 und der konischen Mantelfläche 3 liegende Wandstärke des Anschlussstutzens 2 ein relatives Minimum aufweist. Die konische Mantelfläche 3 des Anschlussstutzens 2 steckt in einer ebenfalls konischen Bohrung 10 in der Wand 11 des Rohrabschnitts 1 und ist dort durch einen Widerstandsschweißvorgang mit der Wand 11 des Rohrabschnitts 1 verschweißt.

Die beim Schweißen erforderliche Schweißwärme kann durch das Wandstärkenminimum im Anschlussstutzen 2 trotz dessen aufgrund der höheren Wandstärke größeren Wärmekapazität nicht zu stark in den Anschlussstutzen 2 abfließen. Dadurch ist eine gleichmäßige Wärmeverteilung in der Schweißnaht einstellbar. Durch axiale Verschiebung des Übergangsbereichs 8 durch unterschiedliche axiale Längen der Bereiche mit den Durchmessern 6 und 7 ist die Lage des Wandstärkenminimums dem jeweiligen Erfordernis sehr einfach anpassbar.

In Fig.2 ist eine Ausschnittsvergrößerung der Bohrung 10 des Rohrabschnitts 1 in einem Teillängsschnitt dargestellt. Die Bohrung 10 ist ebenfalls konisch ausgeführt, wobei der Öffnungswinkel 12 der Bohrung 10 geringfügig größer ist, als der Konuswinkel des in dieser Figur nicht gezeigten konischen Außenmantels des Anschlussstutzens 2. Durch diesen Winkelunterschied wird die Bildung einer linienförmigen Berührung des Anschlussstutzens 2 mit dem Rohrabschnitt 1 erleichtert, so dass einerseits ein zum Schweißen geeigneter Übergangswiderstand zwischen den beiden Bauteilen 1 und 2 entsteht und andererseits die Sicherheit, eine geschlossene Berührungslinie zu erreichen, die für die Dichtheit der Verschweißung erforderlich ist, deutlich verbessert ist.

### Bezugszeichenliste

### (Teil der Beschreibung)

- 1: Rohrabschnitt
- 2: Anschlussstutzen
- 3: konische Mantelfläche des Anschlussstutzens 2
- 4: axiale Bohrung des Anschlussstutzens 2
- 5: dem Rohrabschnitt 1 zugeordnetes Ende des Anschlussstutzens 2
- 6: Durchmesser des Anschlussstutzens 2 am Ende 5
- 7: weitere Durchmesser des Anschlussstutzens 2
- 8: Übergangsbereich der Durchmesser 6 und 7
- 9: Konus im Übergangsbereich 8
- 10: seitliche Bohrung im Rohrabschnitt 1
- 11: Wand des Rohrabschnitts 1
- 12: Öffnungswinkel des Konus der Bohrung 10

## Patentansprüche

1. Widerstands-Schweißverbindung zwischen zwei dünnwandigen Rohrabschnitten (1,2) unterschiedlicher Wandstärke, bei der ein erster Rohrabschnitt (1) stirnseitig so an die Mantelfläche eines zweiten Rohrabschnitts (2) angeschweißt ist, dass eine Schweißnaht entsteht, die die fluidleitenden Bereiche der beiden Rohrabschnitte (1,2) dicht miteinander verbindet,
**dadurch gekennzeichnet,**
**dass** die zu verschweißenden Bauteile (1,2) derart angeordnet und vorbereitet sind, dass der dickwandigere Rohrabschnitt (2) an der zu verschweißenden Stirnseite (5) eine konische Außenkontur (3) aufweist und
**dass** der dickwandigere Rohrabschnitt (2) eine axiale Stufenbohrung (4) aufweist, die so geformt ist, dass die Bohrung (4) im Bereich der zu verschweißenden Stirnseite (5) des dickwandigeren Rohrabschnitts (2) gegenüber der übrigen Bohrung (4) einen geringeren Durchmesser (6) aufweist und der Übergang (9) zwischen den beiden Durchmessern (6, 7) der Stufenbohrung (4) in einem Übergangsbereich (8) stufenförmig ausgeführt ist, wobei der Übergangsbereich (8) so angeordnet ist, dass die Wandstärke des dickwandigeren Rohrabschnitts (2) im Übergangsbereich (8) ein relatives Minimum aufweist.

2. Widerstands-Schweißverbindung nach Anspruch 1, **dadurch gekennzeichnet, dass** eine Bohrung (10) in der Seitenwand (11) des dünnwandigeren Rohrabschnitts (1) so konisch ausgeführt ist, dass der kleinere Durchmesser des Konus zum Inneren des dünnwandigeren Rohrabschnitts (1) weist und der Öffnungswinkel (12) des Konus so bemessen ist, dass zwischen der konusförmigen Außenwand (3) des dickwandigeren Rohrabschnitts (2) und der Bohrung (10) im dünnwandigeren Rohrabschnitt (1) eine geschlossene ununterbrochene Kontaktlinie besteht.

3. Widerstands-Schweißverbindung nach Anspruch 2, **dadurch gekennzeichnet, dass** die konusförmige Bohrung (10) im dünnwandigeren Rohrabschnitt (1) derart gestaltet ist, dass der Öffnungswinkel (12) des Konus der Bohrung (10) des dünnwandigeren Rohres (1) eine geringfügig größere Öffnung aufweist, als es der korrespondierende Konuswinkel der Außenkontur (3) des dickwandigeren Rohrabschnitts (2) erfordert.
